Europäisches Patentamt

European Patent Office

Office européen des brevets

(11) Veröffentlichungsnummer: **0 311 904**
**A1**

## EUROPÄISCHE PATENTANMELDUNG

(21) Anmeldenummer: 88116550.0

(22) Anmeldetag: 06.10.88

(51) Int. Cl.⁴: **C09J 3/14** , **C08K 5/09** , **C08L 33/14**

(30) Priorität: 14.10.87 DE 3734753

(43) Veröffentlichungstag der Anmeldung:
19.04.89 Patentblatt 89/16

(84) Benannte Vertragsstaaten:
AT BE CH DE ES FR GB GR IT LI LU NL SE

(71) Anmelder: **Henkel Kommanditgesellschaft auf Aktien**
**Postfach 1100 Henkelstrasse 67**
**D-4000 Düsseldorf 1(DE)**

(72) Erfinder: **Schieferstein, Ludwig, Dr.**
**Am Hang 15**
**D-4030 Ratingen 1(DE)**
Erfinder: **Gierenz, Gerhard, Dr.**
**Dieselstrasse 80**
**D-5760 Solingen(DE)**
Erfinder: **Klauck, Wolfgang, Dr.**
**Gelvenweg 2**
**D-4005 Meerbusch 2(DE)**
Erfinder: **Fischer, Herbert, Dr.**
**Am Nettchesfeld 14**
**D-4000 Düsseldorf 13(DE)**

(54) **Wasserlöslicher Alleskleber.**

(57) Bei einer wäßrigen Klebstofflösung, enthaltend ein in neutralisierter Form vorliegendes tertäre aminogruppentragendes Polymer und gewünschtenfalls übliche Zusatzstoffe, sollten die Wasserfestigkeit verbessert und die Tendenz zur Papierwellung verringert werden. Dies gelang dadurch, daß als Neutralisationsmittel eine beim Trocknen der Lösung flüchtige Säure enthalten ist, und daß der Feststoffgehalt in dem Bereich von 30 bis 70 Gew.-% so eingestellt wird, daß eine Lösungsviskosität von 50 Pas nicht überschritten wird.

EP 0 311 904 A1

## Wasserlöslicher Alleskleber

Die Erfindung betrifft wässrige Klebstofflösungen aus Basis aminogruppenhaltiger Polymerer zum Verkleben von Papier, Textil, Leder, Holz oder ähnlichen Substraten mit sich selbst oder anderen Materialien.

Zur Herstellung wässriger Klebstofflösungen für die Papierverklebung wurden bereits zahlreiche wasserlösliche Polymere vorgeschlagen. So beispielsweise Lösungen von Polyvinylpyrrolidon, Polyvinylalkohol, Polyacrylamid oder auch von wasserlöslichen Celluloseethern, oder Stärkederivaten.

Wenngleich die Anbietung eines Klebstoffes als wässrige Lösung große Vorteile bietet - so beispielsweise die Nichtbrennbarkeit und die Ungiftigkeit - so wird es doch als Nachteil empfunden, daß die Klebeverbindung nicht wasserfest ist. Darüberhinaus führen zahlreiche Klebstofflösung zu einer starken Wellung von zu verklebendem Papier, die auch nach Abtrocknung nicht reversibel ist. Mit wässrigen Klebstofflösungen lassen sich darüberhinaus meist nur geringere Klebefestigkeiten als mit Lösungsmittelsystemen erhalten.

Es ist daher Aufgabe der Erfindung, eine Klebstofflösung zu entwickeln, die zum einen nach dem Trocknen eine im Vergleich zu anderen wässrigen Polymerlösungen verbesserte Wasserfestigkeit bewirkt, zum anderen Papier bereits im Bereich mittlerer Feststoffgehalte (um 50 Gew.-%) in substantiell geringerem Ausmaß wellt. Weiterhin sollten die Klebeeigenschaften an Holz und Kunststoffen denen von Lösungsmittelklebestoffen angepaßt werden.

Gegenstand der Erfindung sind somit wässrige Klebstofflösung enthaltend ein in neutralisierter Form vorliegendes tertiäre aminogruppentragendes Polymer und gewünschtenfalls übliche Zusatzstoffe, dadurch gekennzeichnet, daß als Neutralisationsmittel eine beim Trocknen der Lösung flüchtige Säure enthalten ist und, daß der Feststoffgehalt in dem Bereich von 30 bis 75 Gew.-% so eingestellt wird, daß eine Lösungsviskosität von 50 Pas nicht überschritten wird.

In ihrer allgemeinsten Ausführungsform betrifft die Erfindung wässrige Lösungen von Polymeren, die kationische Gruppen, insbesondere Aminogruppen und vorzugsweise tertiäre Aminogruppen, aufweisen, welche durch solche Säuren neutralisiert sind, die beim Trocknen der Lösung flüchtig sind.

Um besonders günstige Eigenschaften zu erhalten hat der Fachmann dabei die Viskosität durch Wahl des Feststoffgehaltes oder durch Einsetzung von Vernetzungsmitteln oder viskositätssenkenden Mitteln so einzustellen, daß sie 50 Pas und vorzugsweise 20 Pas nicht übersteigen. Allerdings sollte die Viskosität der Klebstofflösungen wenigstens 0,5 Pas und insbesondere wenigstens 1 bis 2 Pas betragen.

Als Neutralisationsmittel können die erfindungsgemäßen Klebstofflösungen flüchtige organische Monocarbonsäuren mit bis zu 3 C-Atomen oder auch Kohlensäure enthalten. Geeignete flüchtige organische Monocarbonsäuren sind beispielsweise Ameisensäure oder Essigsäure.

Als aminogruppenhaltige Homo- oder Copolymere können in den erfindungsgemäßen Klebstofflösungen Polymere auf Basis aminogruppenhaltiger Acryl- und/oder Methacrylsäureester und/oder aminogruppenhaltige Acryl- und/oder Methacrylsäureamide eingesetzt werden. So können beispielsweise Polymere auf Basis von Dimethylaminoethylmethacrylat, Dimethylaminoneopentylmethacrylat und/oder Dimethylaminopropylmethacrylamid eingesetzt werden. In gleicher Weise können die analogen Diethylamino-Verbindungen sowie auch die analogen Acrylsäureester verwendet werden. Weitere geeignete aminogruppenhaltige Monomere sind 2-Vinylpyrridin oder 4-Vinylpyrridin sowie die substituierten Diallylamine. Bei der Herstellung von Copolymeren hat der Fachmann die Copolymerisationsparameter zu beachten. Es gilt hier das allgemeine Fachwissen der Polymer-Chemie.

Die in den erfindungsgemäßen wässrigen Klebstofflösungen eingesetzten Polymeren können außer den aminogruppenhaltigen Monomeren auch noch bis zu 50 Gew.-% bezogen auf Polymer, vorzugsweise bis zu 30 Gew.-% bezogen auf Polymer, weitere Comonomere enthalten. Geeignete Comonomere sind hier die Ester der Acrylsäure oder Methacrylsäure mit Monoalkoholen von 1 bis 4 C-Atomen, so beispielsweise Ethylacrylat, Methylacrylat, Butylacrylat, Methylmethacrylat, Ethylmethacrylat oder Butylmethacrylat.

Bei der Auswahl geeigneter Comonomerer hat der Fachmann auf die Glastemperatur zu achten, das heißt, die Menge an Comonomeren mit hoher Glastemperatur ist so einzustellen, daß keine bei Raumtemperatur spröden, als Klebstoffe nicht geeigneten Materialien entstehen.

Die in den erfindungsgemäßen Klebstofflösungen eingesetzten aminogruppenhaltigen Polymeren können weiterhin noch andere wasserlösliche Monomere enthalten. So können beispielsweise Acrylamid oder auch N-Vinylpyrrolidon eingesetzt werden. Beim Einsatz derartiger Materialien hat der Fachmann darauf zu achten, daß ihr Anteil nicht so groß wird, daß die Polymeren auch ohne Neutralisation wasserlöslich werden. In diesem Fall würde die Wasserfestigkeit nach Auftrocknen leiden. So können die wasserlöslichen Comonomeren in Mengen bis zu 20 Gew.-% bezogen auf Polymer oder auch bis zu 10 Gew.-% bezogen auf Polymer und vorzugsweise zusammen mit nichtwasserlöslichen Monomeren, wie den zuvor genannten Acryl- oder Methacrylsäureestern eingesetzt werden. Die Gesamtzahl der Comonomeren sollte jedoch die Grenzen von 70 Gew.-% und insbesondere die Grenze von 50 Gew.-% nicht überschreiten.

Für die erfindungsgemäßen Klebstofflösungen kann es von Bedeu tung sein, daß bei einem Feststoffgehalt zwischen 30 und 75 Gew.-% eine möglichst geringe Viskosität eingestellt wird. Dem Fachmann stehen dazu mehrere Möglichkeiten zur Verfügung. So können beispielsweise beim Aufbau der Polymeren geringe Mengen an Vernetzungsmitteln mitverwendet werden. Geeignete Vernetzungsmittel sind difunktionelle Acryl- oder Methacrylsäureester oder auch Divinylbenzol. Der Anteil der Vernetzungsmittel am Gewicht der Gesamt-Polymeren sollte dabei 2 % nicht übersteigen. In vielen Fällen sind bereits 0,5 % oder 0,1 % und manchmal sogar noch geringere Mengen ausreichend um eine Senkung der Viskosität zu erreichen. Allerdings ist darauf zu achten, daß bei erhöhter Vernetzungsmittelmenge die Klebekraft nachlassen kann, so daß der Fachmann hier ein günstiges Verhältnis durch wenige Versuche einstellen wird.

Die erfindungsgemäßen Klebstofflösungen können darüberhinaus auch noch viskositätssenkende Mittel enthalten. Zur Viskositätssenkung können ionische Vernetzungsmittel wie mehrfunktionelle Carbonsäuren, beispielsweise Dicarbonsäuren mit 2 bis 10 C-Atomen, eingesetzt werden. Weiterhin kann in vielen Fällen eine Viskositätssenkung dadurch herbeigeführt werden, daß die Lösungseigenschaften des wässrigen Milieus verschlechtert werden. Dies kann beispielsweise durch Zusatz von anorganischen Salzen wie Kochsalz oder Natriumsulfat, in manchen Fällen auch von Wasserstoffbrückenbrechern wie Harnstoff, geschehen. Auch organische Lösungsmittel wie Alkohole oder Ketone können zur Viskositätssenkung eingesetzt werden.

Als weitere Zusatzstoffe können die erfindungsgemäßen Klebstofflösungen die in derartigen Formulierungen üblichen Stoffe enthalten. Es sind dies beispielsweise Konservierungsmittel, Farbstoffe oder auch Riechstoffe.

Die Herstellung der erfindungsgemäßen Klebstofflösungen ist nicht kritisch. Der Fachman hat lediglich darauf zu achten, daß das Molekulargewicht 15.000 und vorzugsweise 30.000 nicht unterschreitet, da ansonsten eine Verschlechterung der Klebeeigenschaften eintreten könnte.

Hergestellt werden kann am zweckmäßigsten durch Polymerisation in wässriger Lösung vor oder nach der Zugabe des Neutralisationsmittels. Sollten die Comonomeren in der wässrigen Monomerlösung nicht löslich sein, so kann auch nach Art einer Fällungspolymerisation in einem Nichtlösungsmittel hergestellt werden und das durch Fällungspolymerisation gewonne Material anschließend in wässriger Lösung, die das Neutralisationsmittel enhalten kann, gelöst werden. Das Neutralisationsmittel kann bei der Polymerisation in wässriger Lösung von Anfang an zugegen sein, es kann jedoch auch erst am Ende der Polymerisation zugegeben werden.

Bei einem hohen Gehalt an nichtwasserlöslichen Comonomeren kann darüberhinaus auch eine Emulsionspolymerisation durchgeführt werden, wobei dann anschließend durch Neutralisation die wässrigen Lösungen hergestellt werden. Bei der Emulsionspolymerisation kann es sich als zweckmäßig erweisen, Substanzen beizugeben, die zur Verminderung der Viskosität führen oder auch Molekulargewichtsregler mitzuverwenden, um ein zu hohes Molekulargewicht, beispielsweise ein Molekulargewicht über 1.000.000, zu ver hindern.

Die erfindungsgemäßen Klebstoffelösungen zeichnen sich durch verbesserte Klebekraft auf einer Vielzahl von unterschiedlichen Substraten aus, so daß sie dem Anspruch eines Allesklebers gerecht werden. Die Klebstofflösungen bilden nach dem Trocknen einen elastischen Film, im Gegensatz zu sehr vielen wasserlöslichen Polymeren, so daß keine Versprödung eintritt. Weiterhin wellen die Lösungen Papier bereits bei einem Feststoffgehalt von zum Beispiel 50 % nicht oder nur schwach, wo hingegen bei Dextrinlösungen dieser Effekt erst bei einem Feststoffgehalt von 70 und mehr Gew.-% zu beobachten ist. Die Klebstoffe besitzen weiterhin einen sehr guten Anfangstack, so daß bei Klebungen, die in der Anfangsphase nicht belastet werden, ein zusätzliches Fixieren entfallen kann.

Die Klebstofflösungen können zum Verkleben von Holz, Papier, Kunststoffen und/oder Metallen mit sich selbst oder miteinander verwendet werden.

Weiterhin sind die Klebstoffe in den ersten Tagen nach erfolgter Klebung mit neutralem Wasser sehr gut auswaschbar. Nach mehreren Wochen erhöht sich die Wasserbeständigkeit der Klebungen deutlich. Ein Effekt, der durch Erwärmung über 50 °C forciert werden kann und möglicherweise auf dem langsamen Verdampfen des Neutralisationsmittels beruhen könnte.

Beispiele

Beispiel 1:

Herstellung einer 50 Gew.-%igen Homopolymerlösung von Dimethylaminoethylmethacrylat (DMAEM)

Im Reaktionsgefäß, versehen mit Rührer, Thermometer, zwei Zulaufgefäßen und Kühler, werden 44,5 Gew.-Teile Wasser und 0,1 Gew.-Teile Starter (Azobisamidinopropandihydrochlorid) vorgelegt und unter Rühren auf 70 °C erwärmt. Innerhalb von 1,5 Stunden werden 41,5 Gew.-Teile DMAEM und 0,4 Gew.-Teile Starter, gelöst in 5 Gew.-Teilen Wasser, zugetropft. Nach einer Nachrührphase (1 Stunde bie 75 °C) wird die Mischung auf 30 °C gekühlt und mit 8,3 Gew.-Teilen Ameisensäure auf pH 6,5 eingestellt. Man erhält eine schwach gelbe, klare Flüssigkeit mit einer Brookfield-Viskosität von ca. 20.000 mPas.

Beispiel 2:

DMAEM-Ethylacrylat-Copolymerisation

Im Reaktionsgefäß, versehen mit Rührer, Thermometer, zwei Zulaufgefäßen und Kühler, werden 57,8 Gew.-Teile Wasser und 0,1 Gew.-Teile Starter (Azobisamidinopropandihydrochlorid) vorgelegt und unter Rühren auf 75 °C erwärmt. Innerhalb von 1,5 Stunden werden eine Mischung von 7 Gew.-Teile Ethylacrylat und 28 Gew.-Teile DMAEM im Zulauf 1 und 0,4 Gew.-Teile Starter (aus Beispiel 1), gelöst in 5 Gew.-Teilen Wasser im Zulauf 2 parallel zugetropft. Es wird anschließend 1 Stunde bei 75 °C nachgerührt. Nach Abkühlen auf 30 °C wird die Mischung mit 6,8 Gew.-Teilen Ameisensäure auf pH 6,5 eingestellt.

Beispiele 3 - 7:

In gleicher Weise wie in Beispiel 2 beschreiben, wurden die folgenden Copolymeren hergestellt:

| 80 Gew.-Teile DMAEM | 20 Gew.-Teile Methylacrlat |
|---|---|
| 70 " DMAEM | 30 " Butylacrylat |
| 60 " DMAEM | 40 " Methylacrylat |
| 75 " DMAEM | 25 " Ethylmethycrylat |
| 80 " DMAEM | 20 " Acrylsäure |
| 80 " DMAEM | 20 " Methacrylsäure |

In allen Fällen konnten befriedigende Klebeeigenschaften festgestellt werden, wobei das Homopolymere den Copolymeren leicht überlegen war.

Klebeeigenschaften der Klebstofflösung nach Beispiel 1:

An geschliffenen Prüfkörpern wurden nach 3 Tagen Lagerzeit Zugscherfestigkeit gemessen und die folgenden Werte ermittelt:

| Holz/Holz | ca. 8 N/mm² |
|-----------|-------------|
| Holz/PVC | ca. 2 N/mm² |
| Holz/ABS | ca. 2 N/mm² |
| Holz/Alu | ca. 4 N/mm² |
| Holz/Stahl | ca. 3 N/mm² |

Hervorzuheben sind die guten Zugscherfestigkeiten an Buchensperrholz und die für wässrige Systeme bemerkenswerte Haftung auf Kunststoffen und Metallen.

Die Wärmestandfestigkeit, bestimmt nach der Methode, daß alle 3 Stunden die Außentemperatur der unter definierter Belastung stehenden Prüfkörper um 10 °C erhöht wird, beträgt 120 °C. Belastung: 1 kg bei 5 cm² Überlappungsflächen.

| Vergleich zu handelsüblichen transparenten Klebstoffen: | | | | |
|---|---|---|---|---|
| | Produkt nach Beispiel 1 | Maltodextrin (Stärkeabbau) | Polyvinylakohollösung | Polyvinylacetatlösung |
| flüssiges Medium | Wasser | Wasser | Wasser | Organische Lösungsmittel |
| Festkörper | 50 % | ca. 60 % | ca. 10 - 25 % | ca. 15 - 30 % |
| Papierabbindung an Chrompapier nach 60µ dickem Auftrag | ca. 3 Min | ca. 2 - 5 Min. | ca. 1 Min. | ca. 2 - 4 Min. |
| Festigkeiten (N/mm²) Holz/Holz | 8,0 | 1,5 | ca. 5,0 - 6,0 | ca. 7,0 |
| Holz/Alu | 4,0 | kleiner 1,0 | ca. 3,0 | ca. 3,0 |
| Holz/ABS | 2,0 | kleiner 1,0 | ca. 1,0 | ca. 4,0 |
| Papierwellen nach Auftrag | sehr schwach | stark | stark | kein Wellen |
| Papierwellen nach Trocknen | kein Wellen | stark | stark | kein Wellen |

**Ansprüche**

1. Wässrige Klebstofflösung enthaltend ein in neutralisierter Form vorliegendes tertiäre aminogruppentragendes Polymer und gewünschtenfalls übliche Zusatzstoffe, dadurch gekennzeichnet, daß als Neutralisationsmittel eine beim Trocknen der Lösung flüchtige Säure enthalten ist und, daß der Feststoffgehalt in dem Bereich von 30 bis 75 Gew.-% so eingestellt wird, daß eine Lösungsviskosität von 50 Pas nicht überschritten wird.

2. Wässrige Klebstofflösung nach Anspruch 1, dadurch gekennzeichnet, daß eine Lösungsviskosität von 20 Pas nicht überschritten wird.

3. Wässrige Klebstofflösung nach Anspruch 1 oder 2, dadurch gekennzeichnet, daß als Neutralisationsmittel eine flüchtige organische Monocarbonsäure mit bis zu 3 C-Atomen oder auch Kohlensäure eingesetzt wird.

4. Wässrige Klebstofflösungen nach einem der Ansprüche 1 bis 3, dadurch gekennzeichnet, daß als aminogruppentragende Polymere, Homo- und/oder Copolymere auf Basis eines aminogruppenhaltigen Acryl- oder Methacrylsäureesters und/oder Acryl- oder Methacrylsäureamid eingesetzt werden, insbesondere Dimethylaminoethylmethacrylat, Dimethylaminoneopentylmethacrylat, Dimethylaminopropylmethacrylamid.

5. Wässrige Klebstofflösungen nach einem der Ansprüche 1 bis 4, dadurch gekennzeichnet, daß die aminogruppentragenden Copolymeren als Comonomere bis zu 50 Gew.-%, bezogen auf Polymer, vorzugsweise bis zu 30 Gew.-%, Acryl- und/oder Methacrylsäureester von Alkoholen mit 1 bis 4 C-Atomen oder auch wasserlösliche Comonomere wie Acrylamid oder N-Vinylpyrrolidon enthalten.

6. Wässrige Klebstofflösungen nach einem der Ansprüche 1 bis 5, dadurch gekennzeichnet, daß die aminogruppentragenden Polymeren zur Viskositätssenkung Vernetzungsmittel in Mengen bis zu 2 Gew.-% enthalten.

7. Wässrige Klebstofflösungen nach einem der Ansprüche 1 bis 6, dadurch gekennzeichnet, daß als Zusatzstoffe viskositätssenkende Mittel enhalten sind.

8. Wässrige Klebstofflösungen nach einem der Ansprüche 1 bis 7, dadurch gekennzeichnet, daß als Zusatzmittel Farbstoffe oder Konservierungsmittel enthalten sind.

9. Verwendung der wässrigen Klebstofflösungen nach den Ansprüchen 1 bis 8 zum Verkleben von Papier, Holz, Kunststoffen und/oder Metallen mit sich selbst oder miteinander.

Europäisches
Patentamt

**EUROPÄISCHER RECHERCHENBERICHT**

Nummer der Anmeldung

EP 88 11 6550

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 612 101 (BITZER)<br>* Ansprüche 1-2; Beispiel 2 *<br>----- | 1 | C 09 J 3/14<br>C 08 K 5/09<br>C 08 L 33/14 |
| | | | **RECHERCHIERTE SACHGEBIETE (Int. Cl.4)**<br><br>C 08 K<br>C 08 L<br>C 09 J<br>C 08 F<br>D 21 H |

Der vorliegende Recherchenbericht wurde für alle Patentansprüche erstellt

| Recherchenort | Abschlußdatum der Recherche | Prüfer |
|---|---|---|
| DEN HAAG | 23-01-1989 | SCHUELER D.H.H. |